# EUROPEAN PATENT APPLICATION

(11) **EP 3 913 239 A1**
(43) Date of publication of application: **24.11.2021**
(21) Application number: 21172260.8
(22) Date of filing: 05.05.2021
(51) Int. Cl.: F16B 39/24

(54) **A VIBRATION RESISTANT FASTENER ASSEMBLY**

(30) Priority: 19.05.2020 IN 202041021007
(71) Applicant: Aktiebolaget SKF, 415 50 Göteborg (SE)
(72) Inventor: Bashetti, Amol, 411057 Wakad, Pune (IN); Kamble, Gopal, 411044 Nigdi, Pune (IN); Pal, Raju, 411027 Pune (IN); Rego, Johnson, 411019 Chinchwad, Pune (IN)
(74) Representative: Tedeschini, Luca

(57) **Abstract**

Disclosed is a fastener assembly (**100**) to avoid accidental loosening due to vibrations. The fastener assembly (**100**) comprises a circular profiled locking washer (**105**), and a lock nut (**110**), wherein the locking washer (**105**) is detachably attachable to an arm (**120**). The locking washer (**105**) comprises a plurality of leaf-shaped grooves (**125**) on a first surface (**130**), and a central axial aperture (**135**) for receiving a threaded shaft (**150**). The lock nut (**110**) comprises a plurality of spring loaded balls (**155**) on a surface facing the first surface of the locking washer (**105**). During operation, the lock nut (**110**) is tightened on the threaded shaft (**150**) by rotating in clockwise direction, and cessation of rotation, latches the plurality of spring loaded balls (**155**) with the plurality of leaf-shaped grooves (**125**) to lock the lock nut (**110**), and hence to withstand counter-rotative torque on the lock nut (**110**) caused by vibrations.

## Description

### FIELD OF THE INVENTION

The present disclosure generally relates to fasteners and fastener assemblies, and more particularly relates to a vibration resistant fastener assembly.

### BACKGROUND OF THE INVENTION

During cultivation, primary tilling and secondary tilling of the land is done to make a good seedbed for the crops. Typically for secondary tillage, a hub mounted on a tractor are commonly used as implements. A hub frame typically comprises an attachment link, a beam, at least one furrow wheel, and a plurality of disc blades. The disc blades are attached to a hub assembly secured on the beam through a tillage machine arm wherein the hub is mounted on the tillage machine arm with the help of a fastener or a nut. Due to harsh environment like vibrations, high tilting forces, shock loads and stone impacts during secondary tillage, the fasteners or nuts loosen. The loosening of the nut gives rise to loss of bearing preload and can lead to unfastening of the nut, further resulting in dislocation of the hub or damage of the hub assembly. In some instances, loosening of the nut can lead to reduced life of the hub.

A nut is a type of fastener with a threaded hole and is used in conjunction with bolts to fasten various parts of a machinery. There are various types of nuts available and the principle of fastening differs with each nut. Most of the nuts work on the principle of friction between the threads, while some nuts work on the principle of tension. Some examples of nuts are standard nuts with washers, nuts with nylon patch, distorted thread locknut, split nut, castle nut etc.

One existing mechanism to secure bolted joints is to use a Nyloc nut. A Nyloc nut is a locknut with a nylon collar insert. The nylon insert locks the nut by friction against the screw. The Nyloc nut is inefficient when it comes to sustaining vibrations. Moreover, the Nyloc nut unlocks when subjected to higher reverse torques and hence is less reliable for high torque applications like secondary tillage. Another mechanism to secure bolted joints is to use a Wedge-lock nut that secures bolted joints with tension instead of friction. Wedge-lock nuts offer higher reliability and can secure bolted joints even when subjected to extreme vibration or dynamic loads. However, Wedge-lock nuts are costly and hence may not be suitable for secondary tillage applications.

### BRIEF SUMMARY OF THE INVENTION

This summary is provided to introduce a selection of concepts in a simple manner that is further described in the detailed description of the disclosure. This summary is not intended to identify key or essential inventive concepts of the subject matter nor is it intended for determining the scope of the disclosure.

The present disclosure discloses a vibration resistant fastener assembly to withstand counter-rotative torque caused by the vibrations and hence to avoid accidental loosening of the fastener assembly. The vibration resistant fastener assembly comprises a circular profiled locking washer having a central axial aperture for receiving a threaded shaft and a lock nut configured for threadedly engaging with the threaded shaft. The circular profiled locking washer comprises a plurality of leaf-shaped grooves on a first surface, and a portion of the circular profiled locking washer is truncated for engaging with a truncated circular aperture of an arm. On the other hand, the lock nut comprises a plurality of spring loaded balls on a surface facing the first surface of the circular profiled locking washer. When the lock nut is fitted on to the threaded shaft and tightened by rotating in clockwise direction, the plurality of spring loaded balls rides on the plurality of leaf-shaped grooves on the circular profiled locking washer, and on cessation of rotation, latches the plurality of spring loaded balls with the plurality of leaf-shaped grooves on the circular profiled locking washer for locking the lock nut and the circular profiled locking washer, and hence withstands counter-rotative torque on the lock nut caused by the vibrations.

To further clarify advantages and features of the present disclosure, a more particular description of the disclosure will be rendered by reference to specific embodiments thereof, which is illustrated in the appended figures. It is to be appreciated that these figures depict only typical embodiments of the disclosure and are therefore not to be considered limiting of its scope. The disclosure will be described and explained with additional specificity and detail with the accompanying figures.

### BRIEF DESCRIPTION OF THE FIGURES

The disclosure will be described and explained with additional specificity and detail with the accompanying figures in which:
**FIGURE 1** illustrates a vibration resistant fastener assembly in accordance with an embodiment of the present disclosure;
**FIGURE 2A** illustrates the circular profiled locking washer **105** in accordance with an embodiment of the present disclosure;
**FIGURE 2B** shows a truncated portion **215** of the circular profiled locking washer 105 in accordance with an embodiment of the present disclosure.
**FIGURE 3** illustrates an exemplary lock nut **110** having three spring loaded balls in accordance with an embodiment of the present disclosure;
**FIGURE 4A and 4B** illustrates exemplary lock nuts in accordance with an embodiment of the present disclosure; and
**FIGURE 5** illustrates an exploded view of the vibration resistant fastener assembly 100 in accordance with an embodiment of the present disclosure.
**FIGURE 6** illustrates an exploded view of the vibration resistant fastener assembly 100 in accordance with a further embodiment of the present disclosure.

Further, persons skilled in the art to which this disclosure belongs will appreciate that elements in the figures are illustrated for simplicity and may not have been necessarily drawn to scale. Furthermore, in terms of the construction of the joining ring and one or more components of the bearing assembly may have been represented in the figures by conventional symbols, and the figures may show only those specific details that are pertinent to understanding the embodiments of the present disclosure so as not to obscure the figures with details that will be readily apparent to those of ordinary skill in the art having benefit of the description herein.

### DETAILED DESCRIPTION

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications to the disclosure, and such further applications of the principles of the disclosure as described herein being contemplated as would normally occur to one skilled in the art to which the disclosure relates are deemed to be a part of this disclosure.

It will be understood by those skilled in the art that the foregoing general description and the following detailed description are exemplary and explanatory of the disclosure and are not intended to be restrictive thereof.

In the present disclosure, relational terms such as first and second, and the like, may be used to distinguish one entity from the other, without necessarily implying any actual relationship or order between such entities.

The terms "comprises", "comprising", or any other variations thereof, are intended to cover a non-exclusive inclusion, such that a process or method that comprises a list of steps does not include only those steps but may include other steps not expressly listed or inherent to such a process or a method. Similarly, one or more elements or structures or components preceded by "comprises... a" does not, without more constraints, preclude the existence of other elements, other structures, other components, additional devices, additional elements, additional structures, or additional components. Appearances of the phrase "in an embodiment", "in another embodiment" and similar language throughout this specification may, but do not necessarily, all refer to the same embodiment.

Unless otherwise defined, all technical and scientific terms used herein have the same meaning as commonly understood by one of ordinary skill in the art to which this disclosure belongs. The components, methods, and examples provided herein are illustrative only and not intended to be limiting.

The present disclosure relates to a vibration resistant fastener assembly. The vibration resistant fastener assembly comprises a circular profiled locking washer, and a lock nut, wherein the circular profiled locking washer is detachably attachable to an arm. The circular profiled locking washer comprises a plurality of leaf-shaped grooves on a first surface, and a central axial aperture for receiving a threaded shaft. Further, a portion of the circular profiled locking washer is truncated for engaging with a truncated circular aperture of the arm. On the other hand, the lock nut comprises a plurality of spring loaded balls on a surface facing the first surface of the circular profiled locking washer. During assembly, the circular profiled locking washer is inserted in the truncated circular aperture of the arm and the threaded shaft is inserted into the central axial aperture of the circular profiled locking washer. Further, the lock nut is tightened on the threaded shaft by rotating in clockwise direction, and upon cessation of the rotation, the plurality of spring loaded balls latches with the plurality of leaf-shaped grooves on the first surface of the circular profiled locking washer for locking the lock nut and the circular profiled locking washer and hence to withstand counter-rotative torque on the lock nut caused by the vibrations and thereby providing vibration resistance to the fastener assembly.

Embodiments of the present disclosure will be described below in detail with reference to the accompanying figures.

Typically, in agricultural tillage application for soil preparation, a hub is mounted on a machine arm with the help of fasteners. The vibration resistant fastener assembly is used for mounting the hub on the machine arm. It avoids dislocation of the hub and preload loss affecting the system performance, and increases the life of the hub, as disclosed in the present disclosure. It is to be noted that the vibration resistant fastener assembly of the present disclosure may be used in automotive, engineering, and other industrial applications.

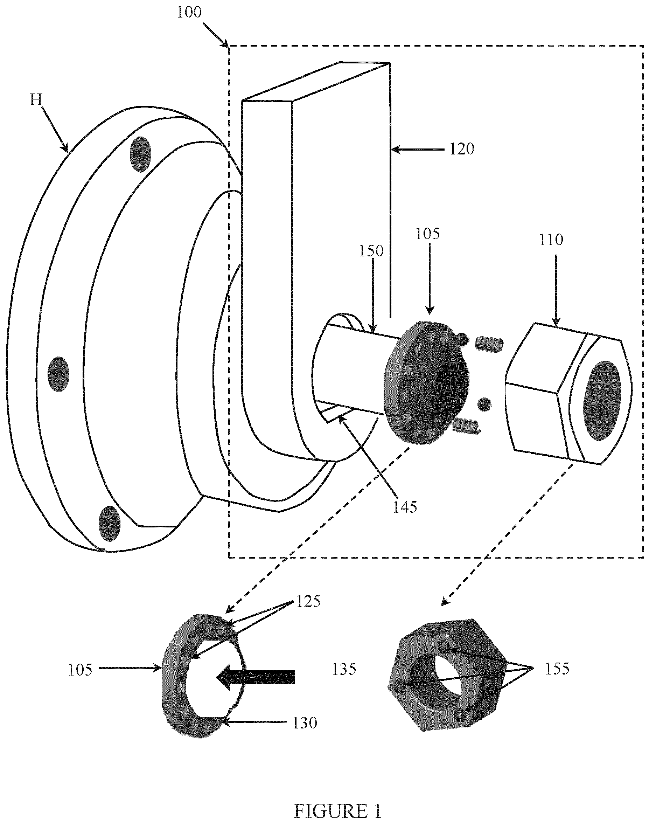

**FIGURE 1** illustrates a vibration resistant fastener assembly in accordance with an embodiment of the present disclosure. As illustrated, the vibration resistant fastener assembly **100** (hereinafter referred as fastener assembly **100**) is used for mounting a hub "**H**" on a machine arm **120,** wherein the hub is used in secondary tillage application. In one embodiment of the present disclosure, the fastener assembly **100** comprises a circular profiled locking washer **105** and a lock nut **110,** wherein the circular profiled locking washer **105** is detachably attachable to the arm **120** for fastening the hub "**H**".

The circular profiled locking washer **105** is made of any of the following materials like steel, non-ferrous metal, or alloys. In one embodiment of the present disclosure, the circular profiled locking washer **105** comprises a plurality of leaf-shaped grooves **125** on a first surface **130,** and a central axial aperture **135** for receiving a threaded shaft **150.** As shown in **FIGURE 1****,** the plurality of leaf-shaped grooves **125** on the circular profiled locking washer **105** is semi-circular at one end and the other end is tapering gradually for providing low resistance during tightening of the lock nut **110.** It is to be noted that the semi-circular portion of the leaf-shaped grooves **125** is designed so as to receive the spring loaded ball when the lock nut **110** is in locked position. In an embodiment of the present disclosure, a circular portion of the circular profiled locking washer **105** is truncated for engaging with a truncated circular aperture **145** of the arm **120.** That is, the arm **120** comprising the truncated circular aperture **145** receives the circular profiled locking washer **105,** and the truncated portion of the circular aperture **145** of the arm **120** and the truncated portion of the circular profiled locking washer **105** are aligned such that it constraints rotational degree of freedom. It is to be noted that the inner diameter of the circular aperture **145** of the arm **120** is same as the outer diameter of the circular portion of the circular profiled locking washer **105** so as to firmly engage the circular profiled locking washer **105** inside the circular aperture **145** of the arm **120.**

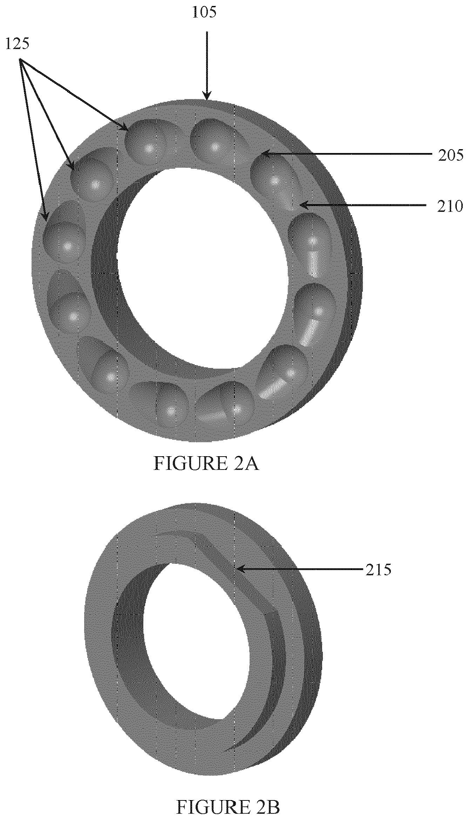

**FIGURE 2A** illustrates the circular profiled locking washer **105** in accordance with an embodiment of the present disclosure. As shown, the circular profiled locking washer **105** comprises the plurality of leaf-shaped grooves **125** on one of the surfaces. One end **205** of each of the leaf-shaped grooves is semi-circular in shape and tapered towards the second end **210.** **FIGURE 2B** shows a truncated portion **215** of the circular profiled locking washer **105** in accordance with an embodiment of the present disclosure. The truncated portion **215** engages with the truncated portion of the circular aperture **145** of the arm **120.**

The lock nut **110** is made of materials such as steel or steel alloy, and the like. The lock nut **110** comprises internal threads (female threads) which engage with male threads of an associated threaded shaft **150,** on which the hub "**H**" is mounted. In one embodiment of the present disclosure, the lock nut **110** comprises a plurality of spring loaded balls **155** on a surface, the surface facing the first surface of the circular profiled locking washer **105** when the lock nut **110** is assembled. The plurality of spring loaded balls **155** latches with the plurality of leaf-shaped grooves **125** of the circular profiled locking washer **105** to lock the lock nut **110** and the circular profiled locking washer **105** and hence to withstand counter-rotative torque on the lock nut **110** caused by the vibrations and hence to avoid accidental loosening of the lock nut **110.**

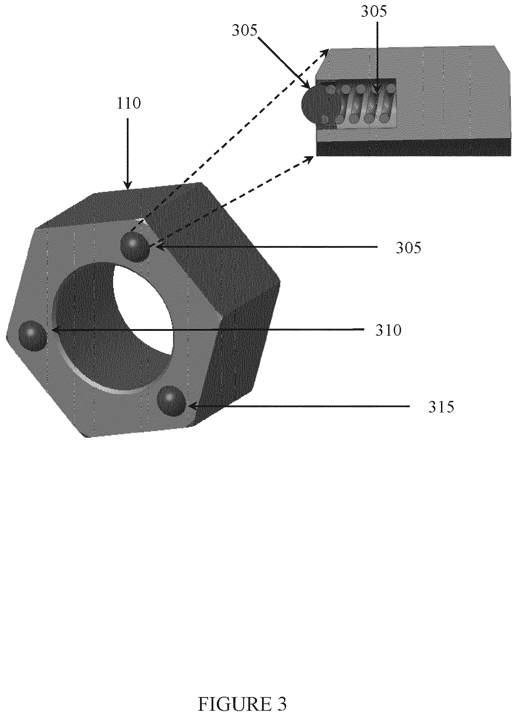

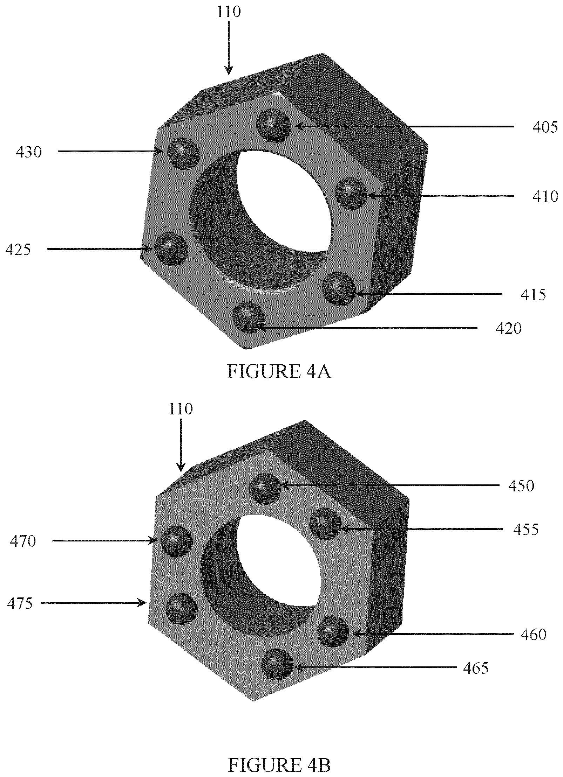

**FIGURE 3** illustrates an exemplary lock nut **110** having three spring loaded balls in accordance with an embodiment of the present disclosure. As shown, the three spring loaded balls **305, 310** and **315** are spaced at equidistant from one another, that is, the three spring loaded balls **305, 310** and **315** are spaced at 120 degrees apart. In another embodiment of the present disclosure, the lock nut **110** comprises six spring loaded balls **405** to **430** spaced at equidistant from one another, as shown in **FIGURE 4A****.** In one example, the spring loaded balls **405** to **430** may be spaced 60 degrees apart. In yet another embodiment of the present disclosure, the lock nut **110** comprises six spring loaded balls **450** to **475** with offset-spacing, as shown in **FIGURE 4B****.**

Referring to **FIGURE 3** now, each spring loaded ball (for example ball **305** as shown) is partially (preferable ½ portion) held inside the lock nut **110** by means of crimping and a compression spring **320** exerts an axial force on the ball **305.** The spring action on the ball **305** by means of the spring **320** enables smooth riding of the ball **305** on the plurality of leaf-shaped grooves **125** during tightening of the lock nut **110,** and the axial force on the ball **305** by means of the spring **320** locks the ball **305** in the semi-circular portion of the leaf-shaped groove on the circular profiled locking washer **105.** Similarly, the plurality of spring loaded balls **155** (Referring back to **FIGURE 1**) gets locked in the plurality of leaf-shaped grooves **125** when the lock nut **110** is tightened and provides resistance to the vibration.

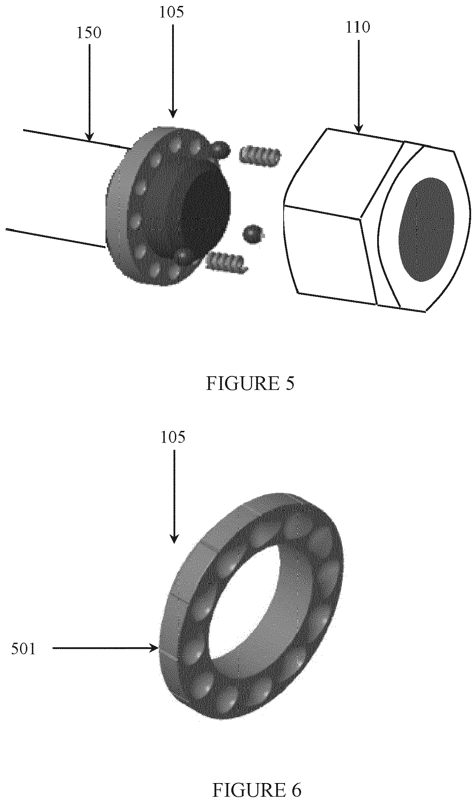

**FIGURE 5** illustrates an exploded view of the vibration resistant fastener assembly 100 in accordance with an embodiment of the present disclosure. Referring to **FIGURE 1** in conjunction with **FIGURE 5****,** the following steps enumerate the various actions during assembly. The hub "**H**" having the threaded shaft **150** and the arm **120** having the truncated circular aperture **145** is shown in **FIGURE 1****.** The circular profiled locking washer **105** is inserted in the truncated circular aperture **145** of the arm **120** through the threaded shaft **150.** The truncated portions of the circular aperture **145** and the circular profiled locking washer **105** restricts the rotational degree of freedom. Then, the lock nut **110** having the plurality of spring loaded balls **155** is fitted on to the threaded shaft **150** and tightened by rotating in clockwise direction. During rotation, the plurality of spring loaded balls **155** rides on the plurality of leaf-shaped grooves **125** on the circular profiled locking washer **105,** and upon cessation of rotation, the plurality of spring loaded balls **155** latches with the plurality of leaf-shaped grooves **125.** The latching of the plurality of spring loaded balls **155** with the leaf-shaped grooves **125** locks the lock nut **110** and the circular profiled locking washer **105** (the fastener assembly **100**) to withstand counter-rotative torque on the lock nut **110** caused by the vibrations and further avoids accidental loosening of the lock nut **110.** The gradual tapering profile of the leaf-shaped grooves **125** provides low resistance during tightening of the lock nut **110** and the semi-circular profile of the leaf-shaped groves **125** resists the counterclockwise rotation of the lock nut **110** during vibrations (counter-rotative torque on the lock nut **110** caused by the vibrations). However, high torque may be applied in counterclockwise direction using a wrench for loosening the lock nut **110** and hence for disassembling fastener assembly **100** for changing the hub, during maintenance, etc.
105

**FIGURE 6** illustrates an exemplary circular profiled locking washer 105 in accordance with a further embodiment of the present disclosure. As shown, the circular profiled locking washer **105** comprises a number of equally circumferentially spaced axial grooves 501. These grooves 501 ensure balls 155 on the the lock nut **110 fit** into the of leaf-shaped grooves **125** from the beginning to avoid any movement/slipping of ball 155 from leaf-shaped grooves **125** which can lead to transverse load loss.

As discussed in the foregoing sections, the vibration resistant fastener assembly **100** with said locking mechanism by means of the circular profiled locking washer **105** having the plurality of leaf-shaped grooves **125,** and lock nut **110** having the plurality of spring loaded balls **155,** is reliable for high torque applications like secondary tillage as the said locking eliminates unintentional loosening of the lock nut **110,** loss of lock nut **110,** dislocation of the hub unit, and preload loss affecting the assembly unit or system performance. The leaf-shaped grooves **125** on the circular profiled locking washer **105** provides low resistance during clockwise rotation of the lock nut **110** and high resistance during anti-clockwise rotation (due to vibrations) of the lock nut **110.** Furthermore, it is to be noted that the vibration resistant fastener assembly **100** disclosed in the present disclosure may be used with conventional threaded shafts and hub assemblies.

While specific language has been used to describe the disclosure, any limitations arising on account of the same are not intended. As would be apparent to a person skilled in the art, various working modifications may be made to the method in order to implement the inventive concept as taught herein.

The figures and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

### List of Reference Numerals:

Vibration resistant fastener assembly **- 100**
Circular profiled locking washer - **105**
Lock nut **-110**
Arm - **120**
A plurality of leaf-shaped grooves - **125**
A first surface of the circular profiled locking washer (**105**) - **130**
Central axial aperture (of circular profiled locking washer **105**) - **135**
Truncated circular aperture (of arm **120**) **- 145**
Threaded shaft - **150**
A plurality of spring loaded balls **- 155**

## Claims

1. A vibration resistant fastener assembly **(100)** comprising:
a circular profiled locking washer **(105)** comprising a plurality of leaf-shaped grooves **(125)** on a first surface **(130),** and a central axial aperture **(135)** for receiving a threaded shaft **(150),** wherein the circular profiled locking washer **(105)** is detachably attachable to an arm **(120);** and a lock nut **(110)** configured for threadedly engaging with the threaded shaft **(150),** the lock nut **(110)** comprising a plurality of spring loaded balls **(155)** on a surface facing the first surface **(130)** of the circular profiled locking washer **(105)** wherein, rotation of the lock nut **(110)** in clockwise direction tightens the lock nut **(110)** on the threaded shaft **(150)** and cessation of the rotation, latches the plurality of spring loaded balls **(155)** with the plurality of leaf-shaped grooves **(125)** on the first surface **(130)** of the circular profiled locking washer **(105).**

2. The vibration resistant fastener assembly **(100)** as claimed in claim 1, wherein the lock nut **(110)** comprising the plurality of spring loaded balls **(155)** is one of, a lock nut **(110)** comprising three spring loaded balls **(305, 310** and **315)** with equidistant spacing between each ball, a lock nut **(110)** comprising six spring loaded balls **(405 to 430)** with equidistant spacing between each ball, and a locknut **(110)** comprising six spring loaded balls **(450** to **475)** with offset-spacing.

3. The vibration resistant fastener assembly **(100)** as claimed in claim 1, wherein latching of the spring loaded balls **(155)** with the leaf-shaped grooves **(125)** on the first surface **(130)** of the circular profiled locking washer **(105)** resists counter-rotative torque caused by vibrations and unlocking of the lock nut **(110)** during vibration.

4. The vibration resistant fastener assembly **(100)** as claimed in claim 1, wherein profile of the leaf-shaped grooves **(125)** on the circular profiled locking washer **(105)** is semi-circular at one end **(205)** and tapering gradually towards the second end **(210).**

5. The vibration resistant fastener assembly **(100)** as claimed in claim 4, wherein gradual tapering profile of the leaf-shaped grooves **(125)** provides low resistance during tightening of the lock nut **(110)** and the semi-circular profile of the leaf-shaped grooves **(125)** provides resistance to counter-rotative torque caused by vibrations and unlocking of the lock nut **(110)** during vibration.

6. The vibration resistant fastener assembly **(100)** as claimed in claim 1, wherein the arm **(120)** comprises a truncated circular aperture **(145)** for receiving and engaging the circular profiled locking washer **(105).**

7. The vibration resistant fastener assembly **(100)** as claimed in claim 6, wherein a circular portion of the circular profiled locking washer **(105)** is truncated for engaging with the truncated circular aperture **(145)** of the arm **(120).**

8. The vibration resistant fastener assembly **(100)** as claimed in claim 1, wherein the circular profiled locking washer **(105)** is made of one of a steel, non-ferrous metal, or alloys.

9. The vibration resistant fastener assembly **(100)** as claimed in claim 1, wherein the circular profiled locking washer **(105)** is provided with a number of equally circumferentially spaced axial grooves **(501).**
